# EUROPÄISCHE PATENTANMELDUNG

(11) **EP 4 113 541 A1**
(43) Veröffentlichungstag der Anmeldung: **04.01.2023**
(21) Anmeldenummer: 21183089.8
(22) Anmeldetag: 01.07.2021
(51) Int. Cl.: H01B 7/02, H01B 7/08, B60L 53/18

(54) **LADELEITUNG MIT OPTIMIERTER HANDHABBARKEIT**

(71) Anmelder: Coroplast Fritz Müller GmbH & Co. KG, 42279 Wuppertal (DE)
(72) Erfinder: DIECKERHOFF, Kristian, 45549 Sprockhövel (DE); BRAMBACH, Oliver, 45549 Sprockhövel (DE); WICHMANN, Helmut, 48249 Dülmen (DE)
(74) Vertreter: Dr. Solf & Zapf Patent- und Rechtsanwalts PartG mbB

(57) **Zusammenfassung**

Die vorliegende Erfindung betrifft eine elektrische Ladeleitung (1) zur Verbindung einer Ladestation mit einem Elektrofahrzeug, aufweisend einen aus einem Kunststoff bestehenden elektrisch isolierenden Mantel und mindestens drei in dem Mantel angeordnete jeweils mindestens einen elektrischen Leiter (7) aufweisende Adern (5), wobei der Mantel mindestens eine geschäumte Schicht (11) aufweist. Eine maximale Breite der Ladeleitung (1) ist in einer senkrecht zur Leitungsachse (L) verlaufenden ersten Erstreckungsrichtung (E1) größer ausgebildet als eine maximale Höhe in einer zu der ersten Erstreckungsrichtung (E1) und zur Leitungsachse (L) senkrecht verlaufenden zweiten Erstreckungsrichtung (E2). Ferner betrifft die Erfindung eine konfektionierte elektrische Ladeleitung, aufweisend eine solche Ladeleitung (1) und mindestens ein mit der Ladeleitung (1) an mindestens einem Ende elektrisch verbundenen Steckkupplungsteil zum lösbaren elektrischen Verbinden der Ladeleitung (1) mit einem kompatiblen Steckkupplungsteil eines Elektrofahrzeugs.

## Beschreibung

Die Erfindung betrifft eine elektrische Ladeleitung zur Verbindung einer Ladestation mit einem Elektrofahrzeug, aufweisend einen aus einem Kunststoff bestehenden elektrisch isolierenden Mantel und mindestens drei in dem Mantel angeordnete jeweils mindestens einen elektrischen Leiter und eine Isolierungsschicht aufweisende Adern, wobei der Mantel mindestens eine geschäumte Schicht aufweist. Zudem umfasst die Erfindung eine mit einer derartigen Ladeleitung und mindestens einem Steckkupplungsteil konfektionierte elektrische Ladeleitung.

Elektrische Leitungen mit einer geschäumten Mantelschicht sind zum Beispiel aus der EP 2 329 503 A1 bekannt. Die spezifische Masse dieser Leitungen ist relativ gering. Zudem wird das Abmanteln bei der Herstellung der Leitung über größere und übergroße Leitungslängen erleichtert und es verbessern sich das Torsionsverhalten sowie durch eine dämpfende Wirkung der geschäumten Schicht die mechanische Druckbeständigkeit und die Biegewechselfestigkeit.

Die Ladeleitungen müssen diverse Standards und Normen erfüllen. Zu nennen sind insbesondere die Norm IEC 62893-1 und -3 Edition 1.0 vom November 2017 und die DIN EN 50620 vom März 2020 für Ladeleitungen von Elektrofahrzeugen, die diverse Anforderungen an die Struktur, das Material, die Dicke, die mechanischen Eigenschaften, die Isolationseigenschaften, die Flammwidrigkeit, die elektrischen Widerstände, die Beständigkeit gegen Chemikalien als auch die Bewitterungs-/UV-Beständigkeit spezifizieren. Insbesondere spielt auch die Anzahl der Adern, die Wanddicke der Isolierhülle und des Mantels sowie die Außenmaße der Leitung eine wichtige Rolle.

Zudem müssen derartige Ladeleitungen für eine maximale Betriebsspannung bis einschließlich 480 V (Leiter - Erde) bzw. 825 V (Leiter - Leiter) ausgelegt sein. Gleichzeitig darf die maximale Betriebstemperatur am Leiter maximal 90 °C betragen. Zudem muss insbesondere die Ummantelung der Ladeleitung gewährleisten, dass die Temperatur an der Ladeleitungsoberfläche nicht 80 °C übersteigt, bzw. wenn Hautkontakt des Benutzers mit der Ladeleitungsoberfläche nicht ausgeschlossen werden kann, die Temperatur an der Ladeleitungsoberfläche nicht 50 °C übersteigt. Zudem darf insbesondere die Temperatur bei Lagerung der Ladeleitung nicht 40 °C übersteigen.

Zu nennen ist zudem auch der chinesische Standard GB/T 33594-2017 vom 12. Mai 2017, in dem ebenfalls bestimmte Anforderungen, zum Beispiel an die Struktur, das Material, die Dicke, die Isolationseigenschaften und die Flammwidrigkeit, spezifiziert werden.

Aufgrund des bisherigen Aufbaus haben bekannten Ladeleitungen den Nachteil, dass ihre Handhabbarkeit relativ schlecht ist, da sie sich aufgrund ihrer Flexibilität relativ häufig verdrehen und dadurch verknoten können. Zudem bleiben bei einem Aufwickeln der Ladeleitung die Lagen nicht sicher aufeinanderliegen. Dies bereitet insbesondere Probleme, wenn diese Ladeleitungen durch den Fahrer eines Fahrzeugs in dem Elektrofahrzeug verstaut oder an einer Ladestation aufgewickelt und gelagert werden sollen.

Zudem sind insbesondere die Anforderungen an die maximale Temperatur der Ladeleitungsoberfläche schwierig einzuhalten, insbesondere wegen hohen geforderten Ladeleistungen bei gleichzeitig erwarteten Gewichtseinsparungen.

Der Erfindung liegt die Aufgabe zugrunde, eine Ladeleitung zur Verfügung zu stellen, die die normativen Anforderungen einhält und gleichzeitig die Handhabbarkeit verbessert und die Temperatur an der Ladeleitungsoberfläche reduziert.

Die Aufgabe wird erfindungsgemäß durch die Merkmale des kennzeichnenden Teils des Anspruchs 1 gelöst. Dadurch, dass eine maximale Breite der Ladeleitung in einer senkrecht zur Leitungsachse verlaufenden ersten Erstreckungsrichtung größer ausgebildet ist als eine maximale Höhe in einer zu der ersten Erstreckungsrichtung und zur Leitungsachse senkrecht verlaufenden zweiten Erstreckungsrichtung, wird eine präferierte Biegerichtung um die dünnere Seite der Ladeleitung erzeugt. Dies verhindert ein Verdrehen der Ladeleitung in verschiedene Richtungen und erschwert eine Knotenbildung in der Leitung. Zudem vereinfacht dies ein Aufwickeln der Leitung und insofern die Lagerung der Leitung in einem Lagerraum im Elektrofahrzeug oder in einem Aufnahmebehältnis der Ladestation. Zudem ermöglicht dies eine vergrößerte Manteloberfläche, insbesondere bei vergleichbarer minimaler Wanddicke, d.h. bei vergleichbarem minimalen Abstand der Adernaußenflächen zur Mantelaußenfläche. Dadurch kann die Wärmeenergie an der Ladeleitungsoberfläche besser abgeführt werden. Außerdem ermöglicht dies einen größeren Abstand der Energieadern zueinander, wodurch die Wärmeenergie besser in der Ladeleitung verteilt werden kann, so dass die Wärmeenergie effizienter über die Ladeleitungsoberfläche abgeführt werden kann.

Vorteilhafterweise weist der Mantel mindestens zwei Schichten, eine Außenschicht und eine von der Außenschicht umgebene Innenschicht auf, wobei die geschäumte Schicht die Außenschicht und/oder die Innenschicht bildet. Insbesondere bildet die geschäumte Schicht die Innenschicht.

In einer bevorzugten Ausführungsform mit mindestens zwei geschäumten Schichten weisen zwei der geschäumten Schichten eine unterschiedliche spezifische Dichte auf, wobei der Unterschied der spezifischen Dichte der geschäumten Schichten mindestens 5 %, vorzugsweise mindestens 10 % beträgt. Dies ermöglicht eine optimale Abwägung zwischen Gewichtseinsparungen, Zugfestigkeit, Reißdehnung und anderen normativen und technischen Anforderungen, wie zum Beispiel Wanddicken.

Vorzugsweise umgibt die geschäumte Schicht eine äußere Isolationsschicht der Adern unmittelbar, so dass insbesondere keine zusätzlichen Trennmittel oder Gleitschichten zur verbesserten Abtrennbarkeit zwischen der geschäumten Schicht und der Isolationsschicht der Adern notwendig sind.

Dabei ist vorzugsweise die maximale Breite der Ladeleitung in der ersten Erstreckungsrichtung mindestens 1,5 mal größer als die maximale Höhe in der zweiten Erstreckungsrichtung. Durch eine Reduzierung der Höhe auf einer Seite der Ladeleitung ergeben sich auch kleinere Biegeradien über die dünnere Seite. Die Ladeleitung lässt sich aufgrund des verringerten Biegeradius über die dünnere Seite auf einen geringeren Radius wickeln. Die breitere Seite erhöht die Stabilität beim Aufwickeln der Lagen aufeinander.

Die maximale Breite in der ersten Erstreckungsrichtung beträgt je nach Adernquerschnitt insbesondere zwischen 10 mm und 22 mm. Die maximale Höhe in der zweiten Erstreckungsrichtung beträgt je nach Adernquerschnitt insbesondere zwischen 4 mm und 12 mm.

Mit der Reduzierung der Höhe auf einer Seite und dem dadurch bedingten Aufbau einer dünneren Seite lässt sich das Verpackungsmaß durch Aufrollen der Ladeleitung gegenüber einer runden Ladeleitung reduzieren.

Aufgrund der geringeren Biegefähigkeit der Ladeleitung über die breitere Seite lässt sich die Ladeleitung optimiert in den Konfektionsautomaten führen. Durch die flache Anordnung der Elemente bleiben diese immer an der gleichen Stelle in der Ladeleitung und lassen sich daher im Konfektionsprozess einfacher orten und verarbeiten. Da die einzelnen Elemente keine Trennhilfe benötigen, entfallen zusätzliche Arbeitsschritte bzw. kommt es nicht zu Verunreinigungen der Anlage durch staubförmige Partikel.

Von den Adern der Ladeleitung dienen mindestens drei Adern zur Übertragung eines Ladestroms als sogenannte Energieader. Vorzugsweise dient mindestens eine Ader zur Daten- oder Signalübertragung zwischen Ladestation und Elektrofahrzeug als sogenannte Pilotader. In einer bevorzugten Ausführungsform weist die Ladeleitung drei Energieadern und eine Pilotader, insbesondere zwei Pilotadern auf. In einer alternativen bevorzugten Ausführungsform weist die Ladeleitung fünf Energieadern und bis zu fünf Pilotadern auf. Vorzugsweise weist die Ladeleitung mindestens eine, vorzugsweise zwei Pilotadern auf.

Vorzugsweise umfassen die Energieadern und/oder die Pilotadern jeweils mehrere metallische, insbesondere aus Kupfer-, Aluminium- und/oder Metalllegierungen bestehenden, Adern zur elektrischen Übertragung. Die Energieadern und/oder die Pilotadern weisen eine eigene elektrische Isolationsschicht auf.

Dabei sind die Energieadern einer Ladeleitung im Querschnitt dicker als die Pilotadern einer Ladeleitung. Die Energieadern weisen insbesondere einen mittleren Querschnitt von 1,5 mm² bis 50 mm², vorzugsweise 2,5 mm² bis 6 mm² auf. Die Pilotadern 14 weisen insbesondere einen mittleren Querschnitt von 0,088 mm² bis 1,5 mm², vorzugsweise 0,5 mm² bis 0,75 mm² auf.

Die Außenschicht und/oder die geschäumte Schicht bestehen insbesondere aus thermoplastischen Polyurethan-Elastomeren (TPU), die als teilkristalline Werkstoffe zu der Klasse der thermoplastischen Elastomere gehören. Sie stellen Hochleistungswerkstoffe dar, welche in ihrem Eigenschaftsbild dynamische Belastbarkeit, hohe Flexibilität in einem weiten Temperaturbereich, hohe Verschleißfestigkeiten sowie Knick- und Reißfestigkeiten (Einreiß- und Weiterreißwiderstand) mit guten Beständigkeiten gegen den Einfluss von Öl, Fett und Lösungsmitteln, die Witterung, Ozon und UV-Strahlung, sowie hydrolytisch wirkende Substanzen und Mikroben kombinieren. Sie sind wieder aufschmelzbar und können daher leicht einem Recycling unterworfen werden.

Vorzugsweise ist insbesondere die geschäumte Schicht derart ausgebildet, dass durch die Schaumstruktur die thermische Leitfähigkeit des Außenmantels reduziert wird. Die durch Strombelastungen der Energieadern entstehende Temperaturbelastung wird durch die geschäumte Mantelstruktur thermisch isoliert. Die resultierende Manteloberflächentemperatur ist vergleichend zu massiven Mantelwerkstoffschichten geringer.

Insbesondere eine Kombination von geschäumter Schicht und flacher Bauweise ist besonders vorteilhaft für eine reduzierte Erwärmung der Ladeleitungsoberfläche. Mit dem Einsatz geschäumter Schichten wird das Gewicht der Ladeleitung aufgrund der geringeren Dichte des Materials verringert.

Die Außenschicht weist insbesondere zwei sich gegenüberliegende, in die erste Erstreckungsrichtung verlaufende gerade Bereiche auf, die an den Enden jeweils über einen ringförmigen Bereich mit dem gegenüberliegenden Ende des anderen geraden Bereichs verbunden sind.

In einer vorteilhaften Ausführungsform weist die Außenschicht alternativ dazu in der ersten Erstreckungsrichtung entlang der dünneren Seite der Ladeleitung mehrere bogenförmig verlaufende, aneinander anschließende Teilbereiche auf, die mit ihrem jeweiligen Krümmungsradius an den Außendurchmesser des in dem jeweiligen Teilbereich angeordnete Ader angepasst sind, so dass die Außenschicht insbesondere in dem jeweiligen Teilbereich parallel zu dem Außenumfang der jeweiligen Ader verläuft. Dies ergibt eine konturierte Manteloberfläche, wodurch überflüssiges Material reduziert und das Einsatzgewicht des Mantels auf das Notwendige reduziert wird. Durch die konturierte Oberfläche wird die Manteloberfläche zusätzlich erhöht, was die Wärmeabstrahlung verbessert. Die Ladeleitung erfährt eine zusätzliche Kühlung. Zudem vergrößert sich die Auflagefläche der aufgespritzten Elemente wie Stecker und Tüllen zum Mantel. Das Spritzmaterial kann so auf der größeren Kontaktfläche die Verbindung zum Mantel herstellen und eine erhöhte Abdichtung erreichen. Die Außenschicht weist insbesondere eine mittlere Wanddicke von 0,5 mm bis 2,5 mm auf.

Vorteilhafterweise sind die Adern in der ersten Erstreckungsrichtung parallel zueinander verlaufend und im Querschnitt hintereinander in einer einzigen Reihe angeordnet. Insbesondere ist/sind die Pilotader/n im Querschnitt in Zwischenräumen zwischen den in Reihe angeordneten Energieadern angeordnet.

In einer vorteilhaften Ausführungsform sind die Adern zusammen mit vorzugsweise vorhandenen Pilotadern in zwei insbesondere getrennt voneinander verseilte Adergruppen aufgeteilt, wobei die Adergruppen parallel zueinander verlaufend und im Querschnitt der Ladeleitung in einer einzigen Reihe in der ersten Erstreckungsrichtung hintereinander angeordnet sind.

Vorteilhafterweise umfasst die erste Adergruppe einen Teil der Energieadern, insbesondere drei Energieadern, und vorzugsweise mindestens eine, insbesondere drei Pilotadern. Vorzugsweise sind die Energieadern der ersten Adergruppe im Querschnitt dreieckförmig aneinander anliegend angeordnet. Insbesondere ist jeweils eine Pilotader außenseitig zwischen zwei Energieadern angeordnet.

Bevorzugt umfasst die zweite Adergruppe einen weiteren Teil der Energieadern, insbesondere zwei Energieadern, und vorzugsweise mindestens eine, insbesondere zwei Pilotadern. Dabei sind die Energieadern in der ersten Erstreckungsrichtung E1 parallel zueinander und im Querschnitt hintereinander in einer einzigen Reihe angeordnet und vorzugsweise die Pilotadern außenseitig zwischen den zwei Energieadern jeweils unterhalb und/oder oberhalb im Berührungsbereich der Energieadern angeordnet.

Mit der Trennung der stromführenden Energieadern in zwei Gruppen wird die gegenseitige Erwärmung verringert. Die freie Oberfläche der Energieadern wird vergrößert, was eine bessere Wärmeabfuhr aus der Ladeleitung bedeutet. Zudem vereinfacht dies eine Separation von Energieadern.

Vorzugsweise ist die Ladeleitung ohne separate Trennhilfen, wie zum Beispiel Talkumpulver, auf der Isolationsschicht der Leitungen aufgebaut. Dies ist insbesondere wegen der geschäumten Schicht möglich, da diese weniger stark an den Adern haftet.

Die elektrische Ladeleitung wird vorzugsweise an mindestens einem Ende mit einem Steckkupplungsteil zum lösbaren Verbinden mit einem kompatiblen Steckkupplungsteil eines Elektrofahrzeugs elektrisch und mechanisch verbunden und an dem anderen Ende entweder direkt unlösbar an einer Ladestation elektrisch und mechanisch verbunden oder ebenfalls mit einem Steckkupplungsteil zur lösbaren Verbindung mit einem kompatiblen Steckkupplungsteil einer Ladestation elektrisch und mechanisch verbunden.

Weitere vorteilhafte Ausgestaltungen der Erfindung ergeben sich aus der folgenden Figurenbeschreibung und den abhängigen Unteransprüchen.

Es zeigen:
- Fig. 1: einen Querschnitt durch eine erste Ausführungsform einer erfindungsgemäßen Ladeleitung mit drei Energieadern und zwei Pilotadern,
- Fig. 2a: einen Querschnitt durch eine zweite Ausführungsform einer erfindungsgemäßen Ladeleitung mit drei Energieadern und einer Pilotader,
- Fig. 2b: einen Querschnitt durch eine erste Alternative zur zweiten Ausführungsform gemäß Fig. 2a ohne zusätzliche Außenschicht,
- Fig. 2c: einen Querschnitt durch eine zweite Alternative zur zweiten Ausführungsform gemäß Fig. 2a mit geschäumter Außenschicht,
- Fig. 3: einen Querschnitt durch eine dritte Ausführungsform einer erfindungsgemäßen Ladeleitung mit drei Energieadern und zwei Pilotadern,
- Fig. 4: einen Querschnitt durch eine vierte Ausführungsform einer erfindungsgemäßen Ladeleitung mit drei Energieadern und einer Pilotader,
- Fig. 5: einen Querschnitt durch eine fünfte Ausführungsform einer erfindungsgemäßen Ladeleitung mit fünf Energieadern, zwei Pilotader,
- Fig. 6: einen Querschnitt durch eine sechste Ausführungsform einer erfindungsgemäßen Ladeleitung mit fünf Energieadern, zwei Pilotader,
- Fig. 7: einen Querschnitt durch eine siebte Ausführungsform einer erfindungsgemäßen Ladeleitung mit fünf Energieadern, zwei Pilotader,
- Fig. 8: einen Querschnitt durch eine achte Ausführungsform einer erfindungsgemäßen Ladeleitung mit fünf Energieadern, zwei Pilotader.

Zu der anschließenden Figurenbeschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

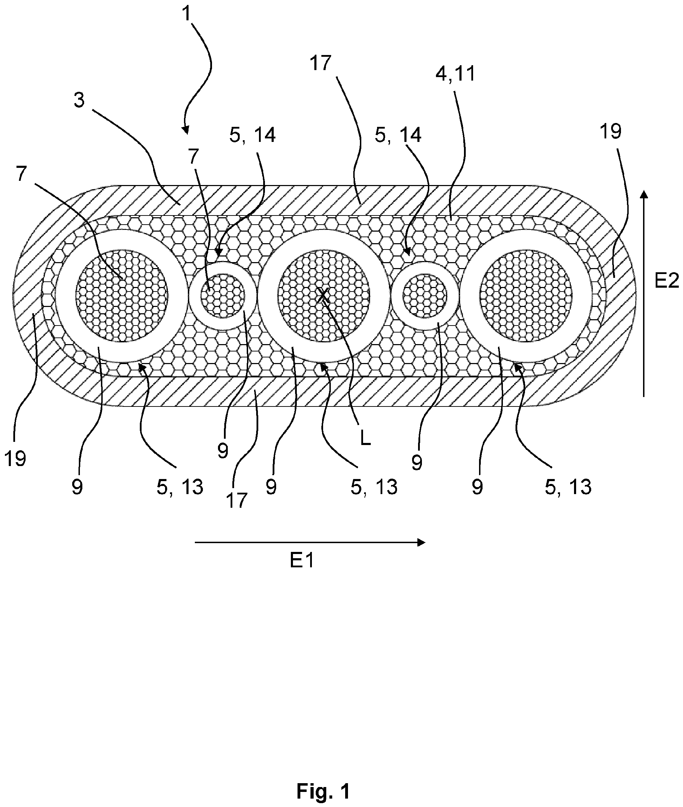

In Fig. 1 ist ein Querschnitt einer ersten Ausführungsform einer erfindungsgemäßen elektrischen Ladeleitung 1 dargestellt. Die Ladeleitung 1 weist eine insbesondere aus Kunststoff bestehende Außenschicht 3 auf. In der Außenschicht 3 sind fünf Adern 5 angeordnet. Die Adern 5 weisen jeweils mehrere metallische elektrische Leiter 7 zur elektrischen Übertragung auf. Jeder der Adern 5 weist eine eigene die elektrischen Leiter 7 umgebene elektrische Isolationsschicht 9 auf. Zwischen der Außenschicht 3 und den Adern 5 ist mindestens eine als geschäumte Schicht 11 ausgebildete Innenschicht 4 angeordnet. Von den Adern 5 sind drei Adern 5 zur Übertragung eines Ladestroms zwischen Ladestation und Elektrofahrzeug als Energieadern 13 und zwei der Adern 5 zur Daten- oder Signalübertragung zwischen Ladestation und Elektrofahrzeug als Pilotadern 14 ausgebildet. Dabei sind die Adern 5 im Querschnitt der Ladeleitung 1 in einer einzigen Reihe in der ersten Erstreckungsrichtung E1 hintereinander angeordnet. Eine Pilotader 14 ist dazu jeweils zwischen zwei Energieadern 13 angeordnet, so dass die maximale Breite der Ladeleitung 1 in der senkrecht zur Leitungsachse L verlaufenden ersten Erstreckungsrichtung E1 größer ausgebildet als die mittlere Höhe in der zu der ersten Erstreckungsrichtung E1 und zur Leitungsachse L senkrecht verlaufenden zweiten Erstreckungsrichtung E2.

Die Außenschicht 3 hat eine homogene Dicke und ist bandförmig ausgebildet. Dazu weist die Außenschicht 3 zwei sich gegenüberliegende, in die erste Erstreckungsrichtung E1 verlaufende gerade Bereiche 17 auf, die an den Enden jeweils über einen ringförmigen Bereich 19 mit dem gegenüberliegenden Ende des anderen geraden Bereichs 17 verbunden sind. Dabei ist der Radius des ringförmigen Bereichs 19 an den Außendurchmesser der endseitig angeordneten Ader 5, insbesondere der Energieader 13, derart angepasst, dass zwischen dem ringförmigen Bereich 19 und der Ader 5 ein Spalt mit mittlerer konstanter Höhe gebildet ist. Die als geschäumte Schicht 11 ausgebildete Innenschicht 4 füllt den Raum zwischen den Adern 5 und der Außenschicht 3, insbesondere auch den Spalt, vollständig aus.

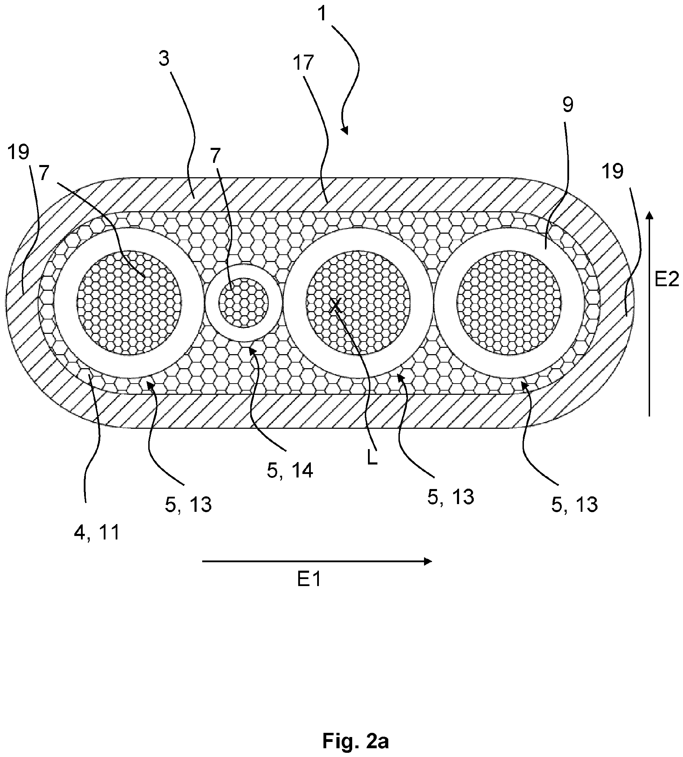

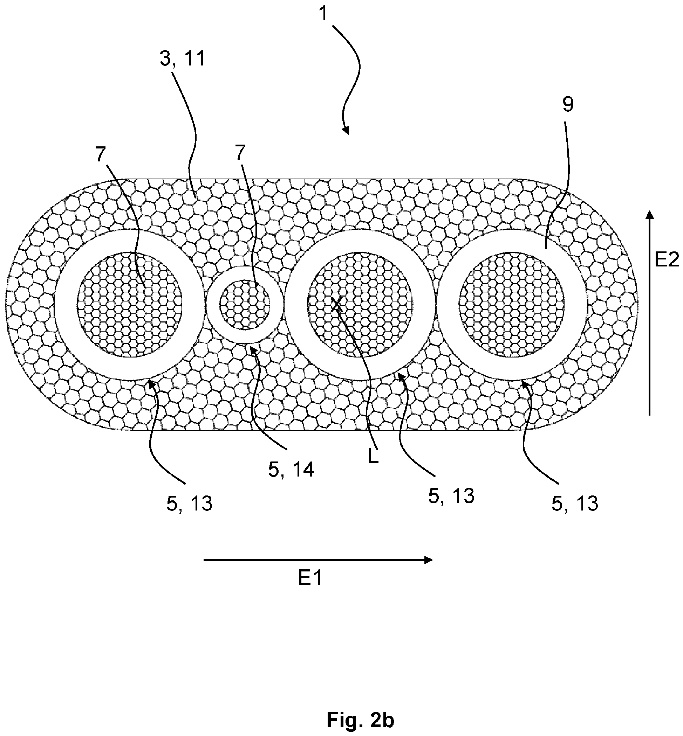

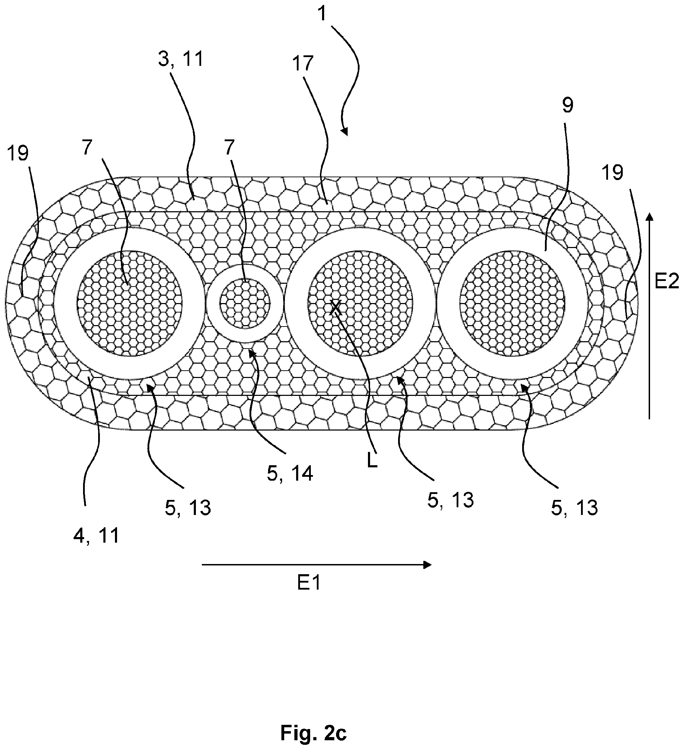

In Fig. 2a ist ein Querschnitt einer zweiten Ausführungsform einer erfindungsgemäßen elektrischen Ladeleitung 1 dargestellt. Die Ladeleitung 1 gemäß Fig. 2 entspricht weitestgehend der Ladeleitung 1 gemäß Fig. 1. Jedoch weist die Ladeleitung 1 gemäß Fig. 2 lediglich eine Pilotader auf.

In Fig. 2b ist ein Querschnitt einer ersten Alternative zur zweiten Ausführungsform gemäß Fig. 2a dargestellt. Die Ladeleitung 1 gemäß Fig. 2b entspricht ebenfalls weitestgehend der Ladeleitung 1 gemäß Fig. 1 bzw. Fig. 2a, jedoch weist die Ladeleitung 1 gemäß Fig. 2b lediglich eine Pilotader auf und hat nur eine als geschäumte Schicht 11 ausgebildete Außenschicht 3 und keine Innenschicht 4.

In Fig. 2c ist ein Querschnitt einer zweiten Alternative zur zweiten Ausführungsform gemäß Fig. 2a dargestellt. Die Ladeleitung 1 gemäß Fig. 2c entspricht weitestgehend der Ladeleitung 1 gemäß Fig. 1 bzw. Fig. 2a, jedoch weist die Ladeleitung 1 gemäß Fig. 2c lediglich eine Pilotader auf und die Außenschicht 3 ist ebenfalls wie die Innenschicht 4 als eine geschäumte Schicht 11 ausgebildet. Vorteilhafterweise weisen die als Innenschicht 4 ausgebildete geschäumte Schicht 11 und die als Außenschicht 3 gebildete geschäumte Schicht 11 eine unterschiedliche spezifische Dichte auf, wobei der Unterschied der spezifischen Dichte der geschäumten Schichten 11 mindestens 5 %, vorzugsweise mindestens 10 % beträgt. Dies ermöglicht eine optimale Abwägung zwischen Gewichtseinsparungen, Zugfestigkeit, Reisdehnung und anderen normativen und technischen Anforderungen, wie zum Beispiel Wanddicken.

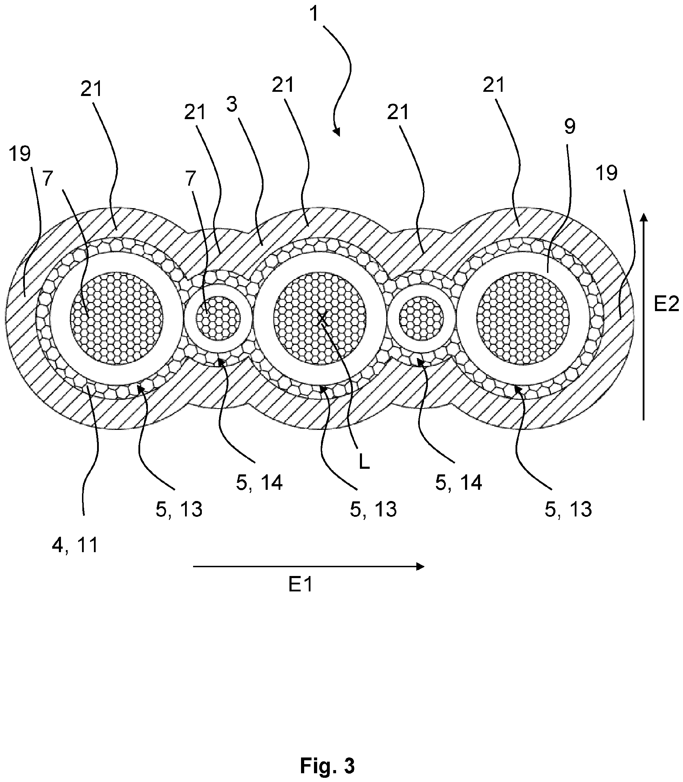

In Fig. 3 ist ein Querschnitt einer dritten Ausführungsform einer erfindungsgemäßen elektrischen Ladeleitung 1 dargestellt. Die Ladeleitung 1 gemäß Fig. 3 entspricht gemäß den Adern 5 der Ladeleitung 1 gemäß Fig. 1. Jedoch unterscheidet sich insbesondere die Gestaltung der Außenschicht 3 und der Innenschicht 4.

Anstatt der in die erste Erstreckungsrichtung E1 des Querschnitts verlaufenden, sich gegenüberliegenden geraden Bereiche 17 der Außenschicht 3 weist die Außenschicht 3 in der ersten Erstreckungsrichtung E1 mehrere bogenförmig verlaufende, aneinander anschließende Teilbereiche 21 auf, die mit ihrem jeweiligen Krümmungsradius an den Außendurchmesser der in dem jeweiligen Teilbereich 21 angeordneten Ader 5 angepasst sind, so dass die Außenschicht 3 insbesondere in dem jeweiligen Teilbereich 21 parallel zu dem Außenumfang der jeweiligen Ader 5 verläuft. Die Außenschicht 3 ist vorzugsweise mit ihrer Dicke in den jeweiligen Teilbereichen 21 unterschiedlich ausgebildet, wobei sie insbesondere in den Teilbereichen 21 der Pilotadern 14 dicker ausgebildet ist als in den Teilbereichen der Energieadern 13.

Der jeweilige Krümmungsradius der Teilbereiche 21 ist derart angepasst, dass zwischen der Außenschicht 3 und den Adern 5 ein Spalt gebildet ist. Die in Erstreckungsrichtung E1 endseitigen Teilbereiche 21 sind jeweils über einen ringförmigen Bereich 19 mit den jeweiligen gegenüberliegenden endseitigen Teilbereichen 21 verbunden. Dabei ist der Radius des ringförmigen Bereichs 19 an den Außendurchmesser der endseitig angeordneten Ader 5, insbesondere der Energieader 13, derart angepasst, dass zwischen dem ringförmigen Bereich 19 und der Ader 5 ebenfalls ein Spalt gebildet ist. Der Spalt hat vorzugsweise eine mittlere konstante Höhe und ist vorteilhafterweise durch die als geschäumte Schicht 11 ausgebildete Innenschicht 4 vollständig ausgefüllt.

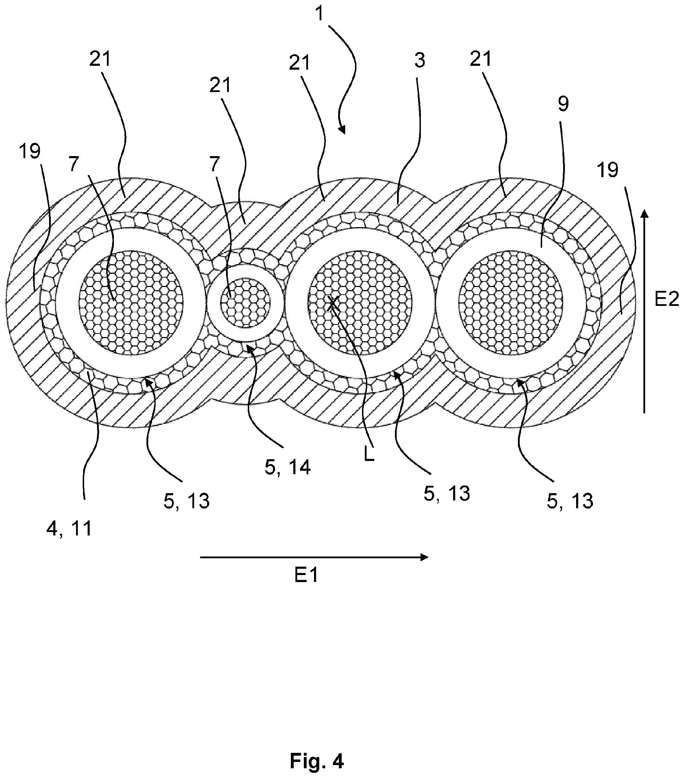

In Fig. 4 ist ein Querschnitt einer vierten Ausführungsform einer erfindungsgemäßen elektrischen Ladeleitung 1 dargestellt. Die Ladeleitung 1 gemäß Fig. 4 entspricht weitestgehend der Ladeleitung 1 gemäß Fig. 3. Jedoch weist die Ladeleitung 1 gemäß Fig. 4 lediglich eine Pilotader 14 auf.

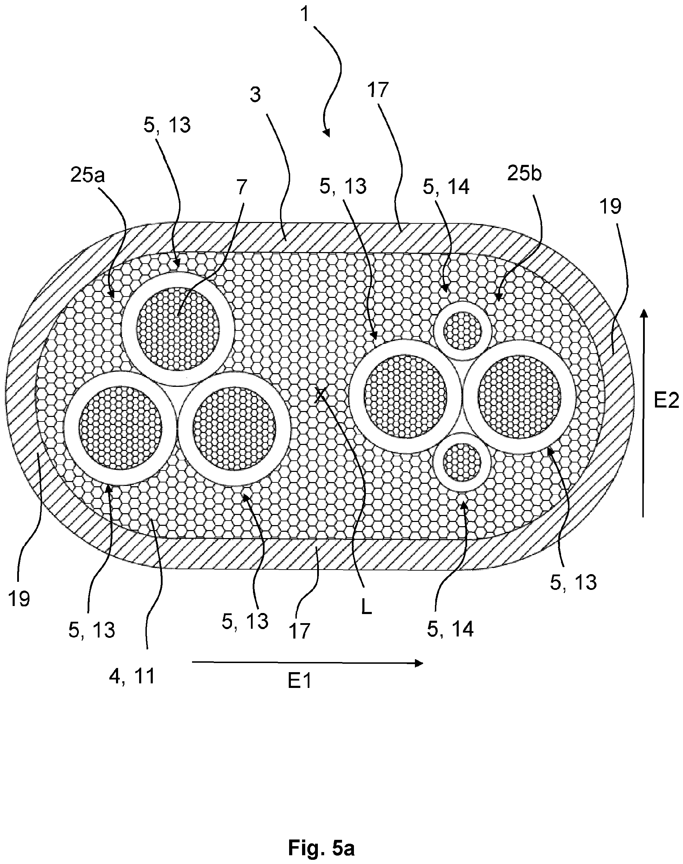

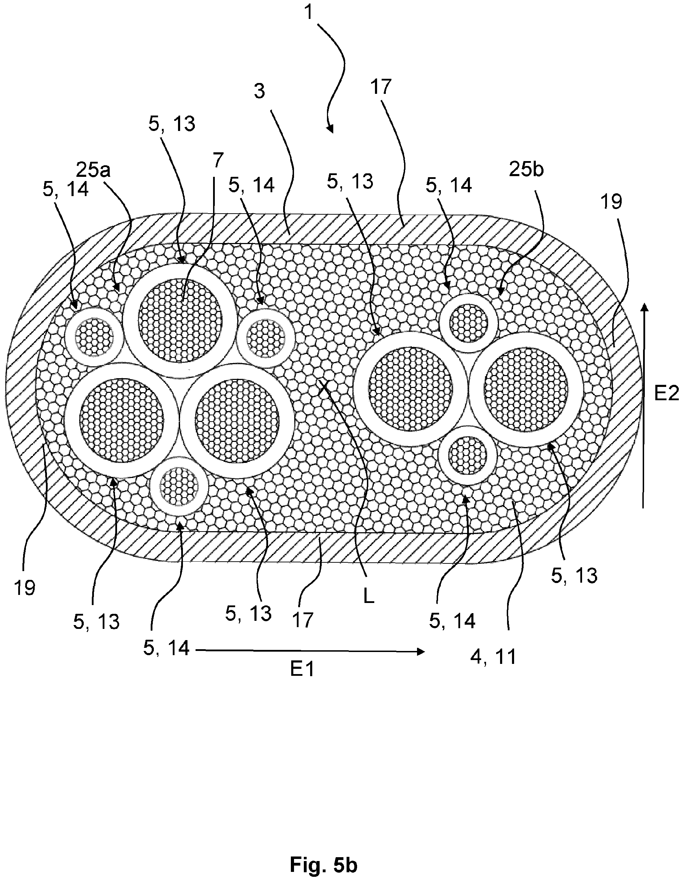

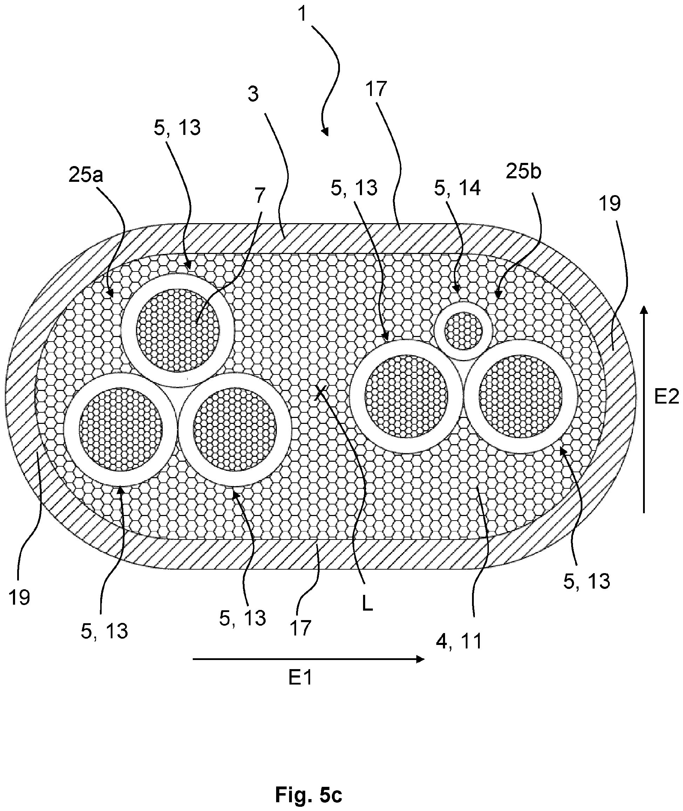

In Fig. 5 ist ein Querschnitt einer fünften Ausführungsform einer erfindungsgemäßen elektrischen Ladeleitung 1 dargestellt. Die Ladeleitung 1 weist eine aus Kunststoff bestehende Außenschicht 3 auf. In der Außenschicht 3 sind sieben Adern 5 angeordnet. Die Adern 5 weisen jeweils mehrere metallische elektrische Leiter 7 zur elektrischen Übertragung auf. Jeder der Adern 5 weist eine eigene, die elektrischen Leiter 7 umgebende elektrische Isolationsschicht 9 auf. Zwischen der Außenschicht 3 und den Adern 5 ist mindestens eine als geschäumte Schicht 11 ausgebildete Innenschicht 4 angeordnet. Von den Adern 5 sind fünf Adern 5 zur Übertragung eines Ladestroms zwischen Ladestation und Elektrofahrzeug als Energieader 13 und zwei der Adern 5 zur Daten- oder Signalübertragung zwischen Ladestation und Elektrofahrzeug als Pilotadern 14 ausgebildet.

Dabei sind die Adern 5 in zwei insbesondere getrennt voneinander verseilte Adergruppen 25a, 25b aufgeteilt. Die Adergruppen 25a, 25b sind parallel zueinander und im Querschnitt der Ladeleitung 1 in einer einzigen Reihe in der ersten Erstreckungsrichtung E1 hintereinander angeordnet.

Die erste Adergruppe 25a umfasst drei Energieadern 13. Dabei sind die Energieadern 13 im Querschnitt dreieckförmig aneinander angeordnet.

Die zweite Adergruppe 25b umfasst zwei Energieadern 13 und zwei Pilotadern 14. Dabei sind die Energieadern 13 in der ersten Erstreckungsrichtung E1 im Querschnitt hintereinander in Reihe angeordnet und die Pilotadern 14 außenseitig zwischen den zwei Energieadern 13 jeweils unterhalb und oberhalb im Berührungsbereich der Energieadern 13 angeordnet.

Durch die Aufteilung in die zwei Adergruppen 25a, 25b und die besondere Anordnung der Adergruppen 25a und 25b ist die maximale Breite der Ladeleitung 1 in der senkrecht zur Leitungsachse L verlaufenden ersten Erstreckungsrichtung E1 größer ausgebildet als die maximale Höhe in der zu der ersten Erstreckungsrichtung E1 und zur Leitungsachse L senkrecht verlaufenden zweiten Erstreckungsrichtung E2.

Die Außenschicht 3 gemäß Fig. 5 ist, wie in der Ausführungsform gemäß Fig. 1 und Fig. 2, bandförmig ausgebildet und hat eine homogene Dicke. Dazu weist die Außenschicht 3 zwei sich gegenüberliegende, in die erste Erstreckungsrichtung E1 verlaufende gerade Bereiche 17 auf, die an den Enden jeweils über einen ringförmigen Bereich 19 mit dem gegenüberliegenden Ende des anderen geraden Bereichs 17 verbunden sind. Dabei ist der Radius der ringförmigen Bereiche 19 an den Außendurchmesser der Adergruppen 25a, 25b, insbesondere der Adergruppe 25a, 25b mit dem größeren Außendurchmesser, derart angepasst, dass zwischen dem ringförmigen Bereich 19 und den Adern 5 beziehungsweise Pilotadern 14 der Adergruppen 25a, 25b ein Spalt gebildet ist. Die als geschäumte Schicht 11 ausgebildete Innenschicht 4 füllt den Raum zwischen den Adergruppen 25a, 25b und der Außenschicht 3, insbesondere den Spalt, vollständig aus.

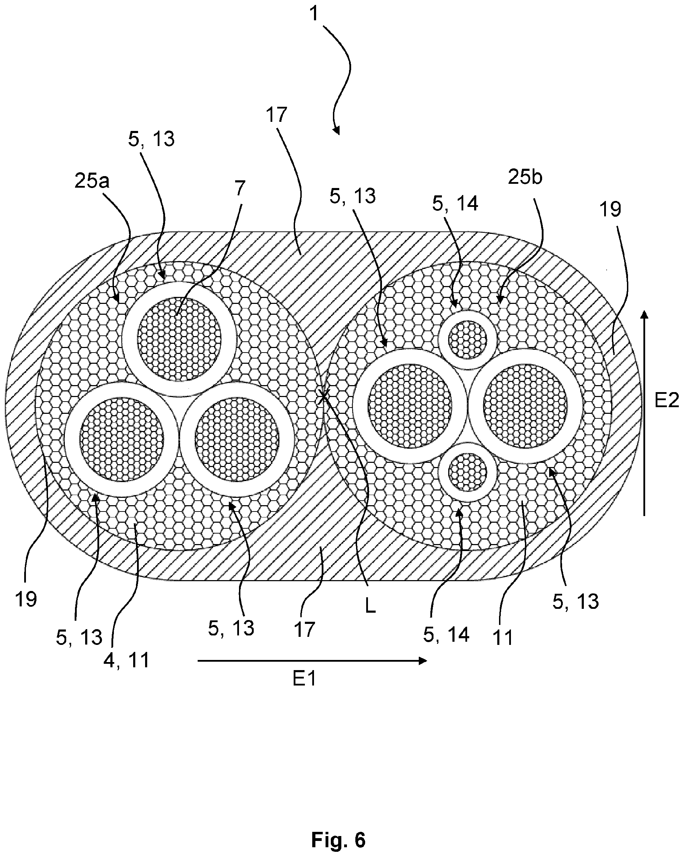

In Fig. 6 ist ein Querschnitt einer sechsten Ausführungsform einer erfindungsgemäßen elektrischen Ladeleitung 1 dargestellt. Die Ladeleitung 1 gemäß Fig. 6 entspricht gemäß den Adern 5 und den Adergruppen 25a, 25b der Ladeleitung 1 gemäß Fig. 5. Jedoch unterscheidet sich insbesondere die Gestaltung der Außenschicht 3 und der als geschäumte Schicht 11 ausgebildete Innenschicht 4.

Gemäß der Ausführungsform in Fig. 6 umhüllt die als geschäumte Schicht 11 ausgebildete Innenschicht 4 die beiden Adergruppen 25a, 25b im Querschnitt jeweils kreisförmig, so dass sich jeweils eine separate kreisförmige Umhüllung für jede Adergruppe 25a, 25b bildet, die tangential aneinander anliegend ausgebildet sind.

Die Außenschicht 3 weist zwei sich gegenüberliegende, in die erste Erstreckungsrichtung E1 verlaufende, außenseitig gerade geformte Bereiche 17 auf, die innenseitig spitz in den Berührungsbereich in Richtung der Leitungsachse L zwischen den beiden kreisförmigen Umhüllungen der Adergruppen 25a, 25b hineinragen und den Raum zwischen den kreisförmigen Umhüllungen der Adergruppen 25a, 25b vollständig ausfüllen.

Die beiden außenseitig gerade geformten Bereiche 17 der Außenschicht 3 sind an den Enden jeweils über einen ringförmigen Bereich 19 mit dem gegenüberliegenden Ende des anderen außenseitig gerade geformten Bereichs 17 verbunden. Dabei ist der Radius der ringförmigen Bereiche 19 an den Außendurchmesser der durch die geschäumte Schicht 11 gebildeten kreisförmigen Umhüllungen der Adergruppen 25a, 25b angepasst.

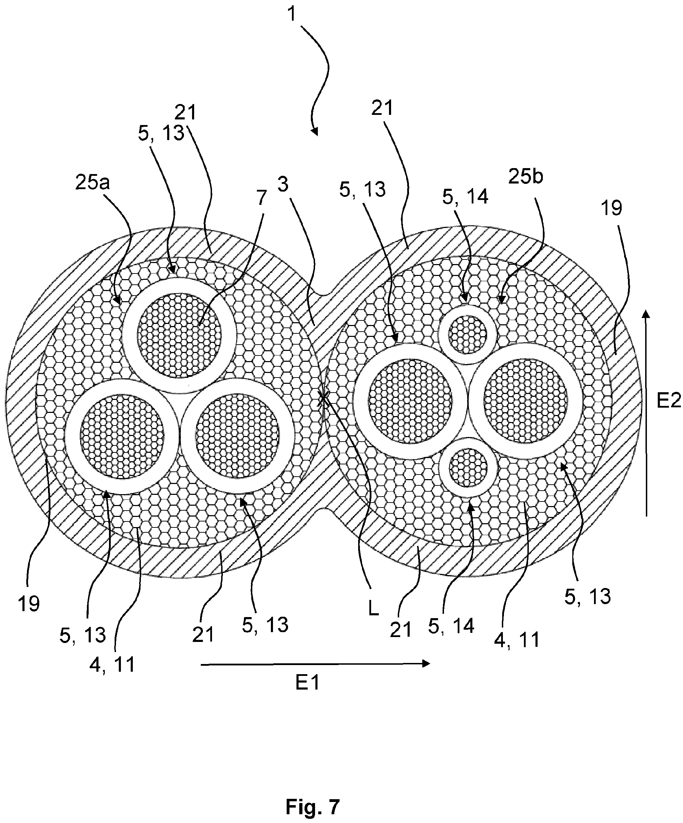

In Fig. 7 ist ein Querschnitt einer siebten Ausführungsform einer erfindungsgemäßen elektrischen Ladeleitung 1 dargestellt. Die Ladeleitung 1 gemäß Fig. 7 entspricht gemäß den Adern 5, den Adergruppen 25a, 25b und der als geschäumte Schicht 11 ausgebildeten Innenschicht 4 mit den zwei Umhüllungen der Adergruppen 25a, 25b der Ladeleitung 1 gemäß Fig. 6. Jedoch unterscheidet sich insbesondere die Gestaltung der Außenschicht 3. Anstatt der außenseitig gerade geformten Bereiche 17 weist die Außenschicht 3 an der oberen und unteren Seite jeweils zwei gekrümmte Teilbereiche 21 auf, deren Krümmung an den Außenradius der durch die geschäumte Schicht 11 gebildeten Umhüllungen der Adergruppen 25a, 25b angepasst ist. Dabei ist die Dicke der Außenschicht 3 und insbesondere der Ringbereiche 19 und der Teilbereiche 21 bis auf die Enden der Teilbereiche 21 in dem Berührungsbereich der beiden Umhüllungen homogen.

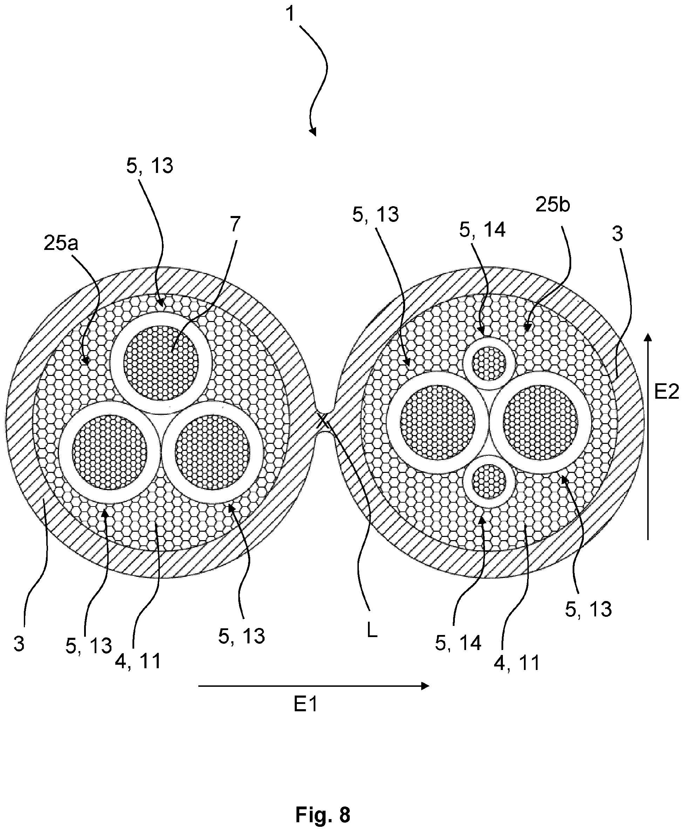

In Fig. 8 ist ein Querschnitt einer achten Ausführungsform einer erfindungsgemäßen elektrischen Ladeleitung 1 dargestellt. Die Ladeleitung 1 gemäß Fig. 8 entspricht gemäß den Adern 5 und den Adergruppen 25a, 25b der Ladeleitung 1 gemäß Fig. 6 und Fig. 7. Jedoch unterscheidet sich insbesondere die Gestaltung der Außenschicht 3 und der als geschäumte Schicht 11 ausgebildeten Innenschicht 4 mit den zwei Umhüllungen der Adergruppen 25a, 25b der Ladeleitung 1. Anstatt der außenseitig gerade geformten Bereiche 17 gemäß Fig. 6 oder der gekrümmten Teilbereiche gemäß Fig. 7 umhüllt die Außenschicht 3 die beiden durch die geschäumte Schicht 11 gebildeten Umhüllungen der Adergruppen 25a, 25b vollständig und ebenfalls kreisförmig mit einer konstanten mittleren Dicke. Dabei sind die beiden durch die geschäumte Schicht 11 gebildeten Umhüllungen durch die dazwischenliegende Außenschicht 3 voneinander beabstandet, wobei die Außenschicht 3 zwischen den beiden durch die geschäumte Schicht 11 gebildeten Umhüllungen einen Verbindungssteg 27 bildet.

Die Erfindung ist nicht auf die dargestellten und beschriebenen Ausführungsbeispiele beschränkt, sondern umfasst auch alle im Sinne der Erfindung gleichwirkenden Ausführungen. So kann insbesondere die Anzahl der Energieadern 13 und/oder der Pilotadern 14 variieren oder es können andere Adern, Kühlelemente oder Stützelement hinzugefügt sein. Zudem kann bei allen Ausführungsformen die Außenschicht 3 ebenfalls als geschäumte Schicht 11 ausgebildet sein. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Ladeleitung
- 3: Außenschicht
- 4: Innenschicht
- 5: Ader
- 7: elektrischer Leiter
- 9: Isolationsschicht
- 11: geschäumte Schicht
- 13: Energieader
- 14: Pilotader
- 17: gerader Bereich
- 19: Ringbereich
- 21: Teilbereich
- 25a: erste Adergruppe
- 25b: zweite Adergruppe
- 27: Verbindungssteg

- L: Leitungsachse
- E1: erste Erstreckungsrichtung
- E2: zweite Erstreckungsrichtung

## Patentansprüche

1. Elektrische Ladeleitung (1) zur Verbindung einer Ladestation mit einem Elektrofahrzeug, aufweisend einen aus einem Kunststoff bestehenden elektrisch isolierenden Mantel, mindestens drei in dem Mantel angeordnete jeweils mindestens einen elektrischen Leiter (7) und eine Isolierungsschicht (9) aufweisende Adern (5), wobei der Mantel mindestens eine geschäumte Schicht (11) aufweist,
**dadurch gekennzeichnet, dass**
eine maximale Breite der Ladeleitung (1) in einer senkrecht zur Leitungsachse (L) verlaufenden ersten Erstreckungsrichtung (E1) größer ausgebildet ist als eine maximale Höhe in einer zu der ersten Erstreckungsrichtung (E1) und zur Leitungsachse (L) senkrecht verlaufenden zweiten Erstreckungsrichtung (E2).

2. Elektrische Ladeleitung (1) nach Anspruch 1,
**dadurch gekennzeichnet, dass**
der Mantel mindestens zwei Schichten, eine Außenschicht (3) und eine von der Außenschicht (3) umgebene Innenschicht (4) aufweist, und die geschäumte Schicht (11) die Außenschicht (3) und/oder die Innenschicht (4) bildet.

3. Elektrische Ladeleitung (1) nach Anspruch 1 oder 2,
**dadurch gekennzeichnet, dass**
zwei geschäumte Schichten (11) eine unterschiedliche spezifische Dichte aufweisen, wobei der Unterschied der spezifischen Dichte der geschäumten Schichten (11) mindestens 5 %, vorzugsweise mindestens 10 % beträgt.

4. Elektrische Ladeleitung (1) nach einem der Ansprüche 1 bis 3,
**dadurch gekennzeichnet, dass**
die geschäumte Schicht (11) zumindest die Innenschicht (4) bildet.

5. Elektrische Ladeleitung (1) nach einem der Ansprüche 1 bis 4,
**dadurch gekennzeichnet, dass**
die geschäumte Schicht (11) eine äußere Isolationsschicht (9) der Ader (5) unmittelbar umgibt.

6. Elektrische Ladeleitung (1) nach einem der Ansprüche 1 bis 5,
**dadurch gekennzeichnet, dass**
die maximale Breite der Ladeleitung (1) in der ersten Erstreckungsrichtung (E1) mindestens 1,5 mal größer ist als die maximale Höhe der Ladeleitung (1) in der zweiten Erstreckungsrichtung (E2).

7. Elektrische Ladeleitung (1) nach einem der Ansprüche 1 bis 6,
**dadurch gekennzeichnet, dass**
die Adern (5) in der ersten Erstreckungsrichtung (E1) parallel zueinander verlaufend und im Querschnitt in einer einzigen Reihe hintereinander angeordnet sind.

8. Elektrische Ladeleitung (1) nach einem der Ansprüche 1 bis 6,
**dadurch gekennzeichnet, dass**
die Adern (5) in mindestens zwei insbesondere verseilte Adergruppen (25a, 25b) aufgeteilt sind, und die Adergruppen (25a, 25b) in der ersten Erstreckungsrichtung (E1) parallel zueinander verlaufend und im Querschnitt in einer einzigen Reihe hintereinander angeordnet sind.

9. Elektrische Ladeleitung (1) nach einem der Ansprüche 1 bis 8,
**dadurch gekennzeichnet, dass**
mindestens drei der Adern (5) als Energieader (13) und mindestens eine Ader (5) als Pilotader (14) in der Ladeleitung (1) ausgebildet sind.

10. Elektrische Ladeleitung (1) nach einem der Ansprüche 1 bis 9,
**dadurch gekennzeichnet, dass**
fünf Energieadern (13) und zwei Pilotadern (14) in der Ladeleitung (1) ausgebildet sind.

11. Elektrische Ladeleitung (1) nach einem der Ansprüche 9 oder 10,
**dadurch gekennzeichnet, dass**
die Pilotader/n (14) im Querschnitt in Zwischenräumen zwischen den in Reihe angeordneten Energieadern (13) angeordnet ist/sind.

12. Elektrische Ladeleitung (1) nach einem der Ansprüche 1 bis 11,
**dadurch gekennzeichnet, dass**
die Außenschicht (3) zwei sich gegenüberliegende, in die erste Erstreckungsrichtung (E1) verlaufende gerade Bereiche (17) aufweist, die an den Enden jeweils über einen ringförmigen Bereich (19) mit dem gegenüberliegenden Ende des anderen geraden Bereichs (17) verbunden sind.

13. Elektrische Ladeleitung (1) nach einem der Ansprüche 1 bis 12,
**dadurch gekennzeichnet, dass**
die Außenschicht (3) in der ersten Erstreckungsrichtung (E1) mehrere bogenförmig verlaufende, aneinander anschließende Teilbereiche (21) aufweist, die mit ihrem jeweiligen Krümmungsradius an den Außendurchmesser der in dem jeweiligen Teilbereich (21) angeordneten Adern (5) angepasst sind, so dass die Außenschicht (3) insbesondere in dem jeweiligen Teilbereich (21) parallel zu dem Außenumfang der jeweiligen Ader (5) verläuft.

14. Elektrische Ladeleitung (1) nach einem der Ansprüche 8 bis 11,
**dadurch gekennzeichnet, dass**
die Außenschicht (3) in der ersten Erstreckungsrichtung (E1) mehrere bogenförmig verlaufende, aneinander anschließende Teilbereiche (21) aufweist, die mit ihrem jeweiligen Krümmungsradius an den Außendurchmesser der in dem jeweiligen Teilbereich (21) angeordneten Adergruppen (25a, 25b) angepasst sind, so dass die Außenschicht (3) insbesondere in dem jeweiligen Teilbereich (21) parallel zu dem Außenumfang der jeweiligen Adergruppe (25a, 25b) verläuft.

15. Elektrische Ladeleitung (1) nach einem der Ansprüche 2 bis 12,
**dadurch gekennzeichnet, dass**
die Außenschicht (3) und die geschäumte Schicht (11) durch Ko- oder Tandemextrusion miteinander verbunden sind.

16. Elektrische Ladeleitung (1) nach einem der Ansprüche 2 bis 15,
**dadurch gekennzeichnet, dass**
der Mantel, insbesondere die Außenschicht (3) und/oder die geschäumte Schicht (11) zumindest teilweise aus einem insbesondere thermoplastischen Polyurethan bestehen.

17. Elektrische Ladeleitung (1) nach einem der Ansprüche 2 bis 14,
**dadurch gekennzeichnet, dass**
der Mantel, insbesondere die Außenschicht (3) und/oder die geschäumte Schicht (11) zumindest teilweise aus einem insbesondere thermoplastischen Polyolefin-Elastomer oder insbesondere thermoplastischen Polyvinylchlorid bestehen.

18. Konfektionierte elektrische Ladeleitung, aufweisend eine Ladeleitung (1) nach einem der Ansprüche 1 bis 17 und mindestens ein mit der Ladeleitung (1) an mindestens einem Ende elektrisch verbundenen Steckkupplungsteil zum lösbaren elektrischen Verbinden der Ladeleitung (1) mit einem kompatiblen Steckkupplungsteil eines Elektrofahrzeugs.
